# EUROPÄISCHE PATENTSCHRIFT

(11) **EP 1 783 001 B1**
(45) Veröffentlichungstag und Bekanntmachung des Hinweises auf die Patenterteilung: **01.07.2009**
(21) Anmeldenummer: 06022680.0
(22) Anmeldetag: 31.10.2006
(51) Int. Cl.: B60R 9/045

(54) **Dachträger**
Roof rack
Galerie de toit

(30) Priorität: 03.11.2005 DE 102005053178
(43) Veröffentlichungstag der Anmeldung: 09.05.2007
(73) Patentinhaber: SCAMBIA INDUSTRIAL DEVELOPMENTS AKTIENGESELLSCHAFT, 9494 Schaan (LI)
(72) Erfinder: Nägele, Karl, 74321 Bietigheim-Bissingen (DE); Riehle, Jörg, 71679 Asperg (DE)
(74) Vertreter: Hoeger, Stellrecht & Partner Patentanwälte

(56) Entgegenhaltungen:
- EP-A- 0 681 943
- DE-A1- 3 510 805
- GB-A- 1 328 849
- GB-A- 2 337 076

## Beschreibung

Die Erfindung betrifft einen Dachträger für Kraftfahrzeuge mit einer Dachträgeraufnahme, umfassend einen Querträger und endseitig des Querträgers angeordnete Haltevorrichtungen, die relativ zueinander zwischen einer an der Dachträgeraufnahme formschlüssig umgreifenden Fixierstellung und einer die Dachträgeraufnahme freigebenden Freigabestellung und umgekehrt bewegbare Halteelemente aufweisen und die durch die Halteelemente an der Dachträgeraufnahme fixierbar sind.

Derartige Dachträger sind aus dem Stand der Technik e.g. aus Dokument GB 1 328 849 und GB A 2 337 076 bekannt. Bei diesen sind die Halteelemente zwischen der Fixierstellung und der Freigabestellung durch eine zu bedienende Betätigungsvorrichtung bewegbar.

Eine derartige Betätigungsvorrichtung hat den Nachteil, dass deren Betätigung erklärungsbedürftig und außerdem aufwändig ist, wodurch der Montagekomfort eingeschränkt ist.

Der Erfindung liegt daher die Aufgabe zugrunde, einen Dachträger der gattungsgemäßen Art derart zu verbessern, dass dieser mit möglichst großem Komfort montierbar ist.

Diese Aufgabe wird bei einem Dachträger der eingangs beschriebenen Art erfindungsgemäß dadurch gelöst, dass jede Haltevorrichtung mindestens ein gegenüber einem Gehäusekörper bewegbares erstes Halteelement aufweist, welches durch zusammenwirken mit der Dachträgeraufnahme beim Aufsetzen der jeweiligen Haltevorrichtung auf die Dachträgeraufnahme von der Freigabestellung in die Fixierstellung und beim Abheben der Haltevorrichtung von der Dachträgeraufnahme von der Fixierstellung in die Freigabestellung bewegbar ist.

Der Vorteil der erfindungsgemäßen Lösung ist darin zu sehen, dass dadurch ein optimaler Montagekomfort erreichbar ist, indem keine zusätzliche Betätigungsvorrichtung mehr bedient werden muss und somit auch keine Bedienungsfehler bei einem Bedienen einer derartigen Betätigungsvorrichtung auftreten können.

Somit weist ein derartiger Dachträger einen optimalen Montagekomfort auf.

Besonders günstig ist es, wenn das erste Halteelement durch Krafteinwirkung auf die Haltevorrichtung zwischen der Freigabestellung und der Fixierstellung bewegbar ist.

Zweckmäßigerweise erfolgt die Krafteinwirkung derart, dass der Übergang von der Freigabestellung in die Fixierstellung eine Kraftbeaufschlagung der Haltevorrichtung in Richtung der Dachträgeraufnahme erfordert.

Eine derartige Kraftbeaufschlagung ist beispielsweise derart realisierbar, dass die Kraftbeaufschlagung auf den Gehäusekörper der Haltevorrichtung erfolgt oder die Kraftbeaufschlagung auf den mit dem Gehäusekörper verbundenen Querträger erfolgt.

Ferner ist zweckmäßigerweise vorgesehen, dass der Übergang von der Fixierstellung in die Freigabestellung eine Kraftbeaufschlagung der Haltevorrichtung in Richtung von der Dachträgeraufnahme weg erfordert.

Insbesondere erfolgt eine derartige Kraftbeaufschlagung ebenfalls durch Einwirkung auf den Gehäusekörper der Haltevorrichtung oder auf den mit dem Gehäusekörper verbundenen Querträger.

Um eine möglichst optimale Fixierung der Haltevorrichtung an der Dachträgeraufnahme zu erreichen, insbesondere auch eine Fixierung gegen eine Bewegung der Haltevorrichtung relativ zur Dachträgeraufnahme in deren Längsrichtung, ist vorzugsweise vorgesehen, dass das Halteelement in der Fixierstellung durch einen elastischen Kraftspeicher im Sinne einer kraftschlüssigen Festlegung an der Dachträgeraufnahme beaufschlagt ist.

Um auch beim Montieren des Dachträgers unmittelbar nach Erreichen der Fixierstellung diese aufrecht erhalten zu können, ist vorzugsweise vorgesehen, dass das erste Halteelement mit einem elastischen Kraftspeicher zusammenwirkt, der in der Fixierstellung das Halteelement im Sinne einer Aufrechterhaltung der Fixierstellung beaufschlagt.

Diese Lösung hat den großen Vorteil, dass dadurch bei der Montage des Dachträgers die einmal erreichte Fixierstellung bereits aufgrund der Wirkung des elastischen Kraftspeichers aufrecht erhalten wird.

Die gesamten erfindungsgemäßen Lösungen haben den großen Vorteil, dass bei der Montage des erfindungsgemäßen Dachträgers eine Betätigung einer separaten Betätigungsvorrichtung nicht mehr erforderlich ist, sondern die Festlegung des Dachträgers einfach durch das Aufsetzen desselben auf die Dachträgeraufnahme erfolgt, ohne dass hierzu weitere Maßnahmen erforderlich sind.

Vielmehr reicht das Aufsetzen des Dachträgers auf die Dachträgeraufnahme - gegebenenfalls mit einem gewissen Kraftaufwand - für die Montage des Dachträgers aus.

Hinsichtlich der konstruktiven Ausführungen des erfindungsgemäßen Dachträgers sind die unterschiedlichsten Lösungen denkbar. So sieht eine vorteilhafte Lösung vor, dass das erste Halteelement um mindestens ein Gelenk bewegbar gelagert ist, um das erste Halteelement von der Fixierstellung in die Freigabestellung und umgekehrt bewegen zu können.

Prinzipiell wäre es denkbar, dass das mit dem ersten Halteelement zusammenwirkende zweite Halteelement stationär an dem Gehäusekörper angeordnet ist.

Eine besonders günstige Kinematik ist jedoch dann erreichbar, wenn die Haltevorrichtung neben dem ersten Halteelement ein mit diesem zur Fixierung des Dachträgers an der Dachträgeraufnahme zusammenwirkendes gegenüber dem Gehäusekörper bewegbares zweites Halteelement aufweist.

Insbesondere ist dabei vorgesehen, dass das zweite Halteelement durch ein Gelenk relativ zum Gehäusekörper bewegbar ist.

Um eine günstige Relativbewegung der Halteelemente zueinander zu erhalten, ist vorzugsweise vorgesehen, dass das erste und das zweite Halteelement gemeinsam zwischen ihrer Freigabestellung und ihrer Fixierstellung bewegbar sind.

Im einfachsten Fall ist hierbei vorgesehen, dass das erste und das zweite Halteelement durch ein Gelenk miteinander verbunden sind, so dass aufgrund der gelenkigen Verbindung der beiden miteinander die gemeinsame Bewegung derselben zwischen ihrer Fixierstellung und ihrer Freigabestellung realisierbar ist.

Hinsichtlich der Art der Fixierung der Haltevorrichtung an der Dachträgeraufnahme wurden bislang keine näheren Angaben gemacht. Beispielsweise wäre es denkbar, eine kraftschlüssige Verbindung vorzusehen. Eine derartige kraftschlüssige Verbindung alleine ist jedoch aus Sicherheitsgründen bedenklich.

Aus diesem Grund ist vorteilhafterweise vorgesehen, dass das erste und das zweite Halteelement in der Fixierstellung gemeinsam die Dachträgeraufnahme zumindest teilweise umfassen.

Damit ist in einfacher Weise eine formschlüssige Sicherung der Haltevorrichtung an der Dachträgeraufnahme gegen eine Bewegung quer zur Längsrichtung der Dachträgeraufnahme gewährleistet.

Um außerdem auch noch eine Sicherung gegen eine Bewegung längs der Dachträgeraufnahme zu erhalten, ist vorzugsweise vorgesehen, dass das erste und das zweite Halteelement in der Fixierstellung an der Dachträgeraufnahme kraftschlüssig, insbesondere klemmend angreifen.

Eine Realisierung einer derartigen Fixierung der Haltevorrichtung an der Dachträgeraufnahme sieht beispielsweise vor, dass das erste und das zweite Halteelement Halteflächen aufweisen, die in der Fixierstellung auf gegenüberliegenden Seiten an der Dachträgeraufnahme angreifen.

Besonders günstig ist eine Fixierung der Haltevorrichtung an der Dachträgeraufnahme realisierbar, wenn die Halteflächen zum Erreichen der Fixierstellung in der Art einer Zangenbewegung an Anlageflächen der Dachträgeraufnahme anlegbar sind.

Ferner ist es ebenfalls vorteilhaft, wenn die Halteflächen zum Erreichen der Freigabestellung in der Art einer Zangenbewegung von Anlageflächen der Dachträgeraufnahme wegbewegbar sind.

Eine derartige Bewegbarkeit der Halteflächen lässt sich zweckmäßigerweise dann erreichen, wenn das erste Halteelement und das zweite Halteelement an durch eine Gelenk miteinander verbundenen Hebeln ausgebildet sind. Mit derartigen Hebeln lässt sich dann in einfacher Weise die Zangenbewegung der Halteflächen relativ zueinander konstruktiv einfach realisieren.

Um die Zangenbewegung der ersten und zweiten Halteflächen relativ zueinander ohne eine Betätigungseinrichtung einleiten zu können, ist vorzugsweise vorgesehen, dass das Gelenk zwischen dem ersten und dem zweiten Halteelement auf einer Bahn relativ zu dem Gehäusekörper bewegbar ist.

Durch eine derartige Relativbewegung des Gelenks zwischen dem ersten und dem zweiten Halteelement kann in einfacher Weise auch die Bewegung des ersten und des zweiten Halteelements relativ zueinander konstruktiv realisiert werden.

Dabei kann das Gelenk beispielsweise durch eine Bahnführung geführt werden und bei Bewegung des Gelenks längs der Bahnführung kann durch zusätzliche Kulissenbahnen die Bewegung der Halteelemente relativ zueinander festgelegt werden.

Konstruktiv einfacher lässt sich eine Bewegung des Gelenks zwischen dem ersten und dem zweiten Halteelement dann realisieren, wenn eines der Halteelemente an dem Gehäusekörper mittels eines Gelenks gelagert ist und somit die Bahn des Gelenks zwischen den Halteelementen durch das Gelenk zwischen dem einen der Halteelemente und dem Gehäusekörper vorgebbar ist.

Ferner ist in diesem Fall zweckmäßiger vorgesehen, dass das andere der Halteelemente zumindest in der Fixierstellung gegenüber dem Gehäusekörper abgestützt ist, um zu erreichen, dass die Halteflächen an der Dachträgeraufnahme anliegen.

Eine derartige Abstützung des anderen der Halteelemente an dem Gehäusekörper könnte ebenfalls beispielsweise durch eine Bahnführung erreicht werden, die die Bewegung des anderen der Halteelemente relativ zum einen der Halteelemente steuert. Eine andere Möglichkeit wäre, einen oder mehrere Anschläge vorzusehen, die die Relativposition des anderen der Halteelemente bezüglich des einen der Halteelemente beim Bewegen in die Fixierstellung festlegen und somit ebenfalls das andere der Halteelemente in der Fixierstellung so beaufschlagen, dass die ersten Halteflächen und die zweiten Halteflächen an der Dachträgeraufnahme anliegen.

Eine besonders vorteilhafte Art der Abstützung des anderen der Halteelemente an dem Gehäusekörper sieht vor, dass die Abstützung mittels einer längenvariablen Strebe erfolgt, die gelenkig mit dem anderen der Halteelemente und gelenkig mit dem Gehäusekörper verbunden ist. Durch diese Strebe wird dann die Position des anderen der Halteelemente relativ zum einen der Halteelemente festgelegt.

Eine besonders vorteilhafte Lösung sieht vor, dass die längenvariable Strebe gegen die Wirkung eines elastischen Kraftspeichers von einer Maximallänge bis zu einer Minimallänge variierbar ist. Dadurch hat aufgrund der Wirkung des elastischen Kraftspeichers die Strebe stets die Tendenz ihre Maximallänge zu erreichen und jede Reduzierung der Länge der Strebe führt zu einer Kraftwirkung, insbesondere einer Steigerung der Kraftwirkung des vorgespannten elastischen Kraftspeichers.

Die Minimallänge des elastischen Kraftspeichers kann dabei in unterschiedlichster Art und Weise festgelegt werden.

Eine besonders einfache konstruktive Lösung sieht vor, dass der elastische Kraftspeicher selbst die Minimallänge der längenvariablen Strebe festlegt.

Zweckmäßigerweise ist dabei die Minimallänge der längenvariablen Strebe so bestimmt, dass diese in der Fixierstellung eine formschlüssige Fixierung der Dachträgeraufnahme sicherstellt, das heißt, dass die Minimallänge der Strebe so bemessen ist, dass diese verhindert, dass in der Fixierstellung das erste Halteelement sich derart bewegt, dass die Dachträgeraufnahme aus ihrer von den Halteflächen formschlüssig umfassten Stellung herausbewegbar ist.

Eine konstruktiv besonders günstige Lösung sieht vor, dass die das erste und zweite Halteelement bildenden Hebel und die längenvariable Strebe zusammen eine dreiarmige Hebelanordnung bilden.

Im Zusammenhang mit der bisherigen Beschreibung der einzelnen Ausführungsbeispiele wurde nicht näher darauf eingegangen, wie eine Aufrechterhaltung der Fixierstellung sichergestellt werden kann.

Beispielsweise wäre es denkbar, beide Halteelemente in ihrer Fixierstellung relativ zueinander festzulegen.

Eine besonders einfache Lösung sieht jedoch vor, dass eines der Halteelemente in seiner Fixierstellung durch eine Verriegelungsvorrichtung festlegbar ist.

Besonders günstig ist es dabei, wenn die Verriegelungsvorrichtung bei Erreichen der Fixierstellung selbsttätig verriegelnd wirksam ist, so dass ebenfalls kein zusätzliches Bedienen oder Betätigen der Verriegelungsvorrichtung erforderlich ist, sondern nur beim Übergang von der Fixierstellung in der Freigabestellung ein Lösen der Verriegelungsvorrichtung erforderlich ist.

Weiterhin ist es von Vorteil, wenn eines der Halteelemente mit der Verriegelungsvorrichtung relativ zum Gehäusekörper festlegbar ist, da in diesem Fall die Verriegelungsvorrichtung ebenfalls am Gehäusekörper angeordnet sein kann und somit ein einfaches Lösen der Verriegelungsvorrichtung realisierbar ist.

Weitere Merkmale und Vorteile sind Gegenstand der nachfolgenden Beschreibung sowie der zeichnerischen Darstellung eines Ausführungsbeispiels.

In der Zeichnung zeigen:
- Fig. 1: eine perspektivische Darstellung eines Endbereichs eines ersten Ausführungsbeispiels eines erfindungsgemäßen Dachträgers montiert auf einer von zwei am Kraftfahrzeug vorgesehenen Dachträgeraufnahmen;
- Fig. 2: einen Schnitt längs Linie 2-2 in Fig. 1 in Fixierstellung;
- Fig. 3: einen Schnitt ähnlich Fig. 2 in Freigabestellung;

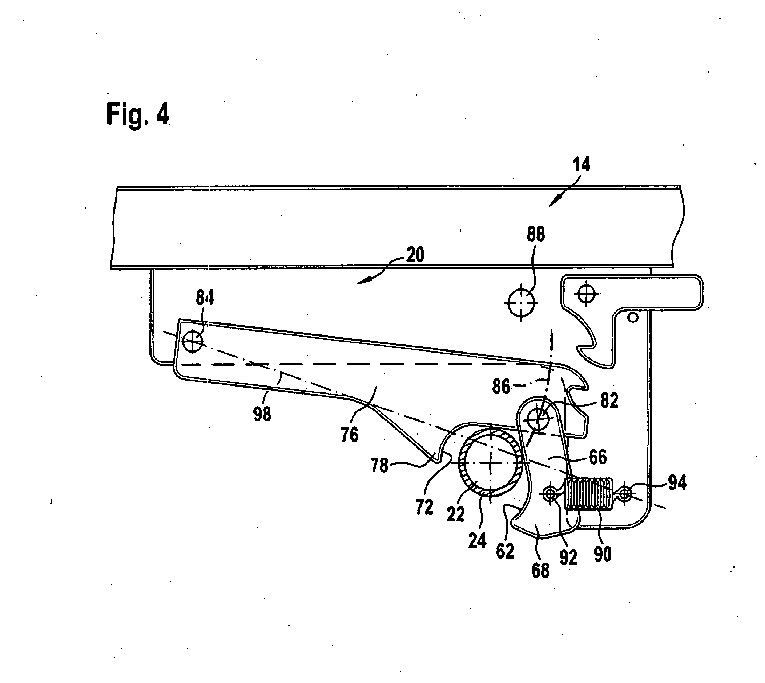

- Fig. 4: einen Schnitt ähnlich Fig. 2 beim Übergang von der Freigabestellung in die Fixierstellung nach Aufsetzen der Haltevorrichtung auf die Dachträgeraufnahme;

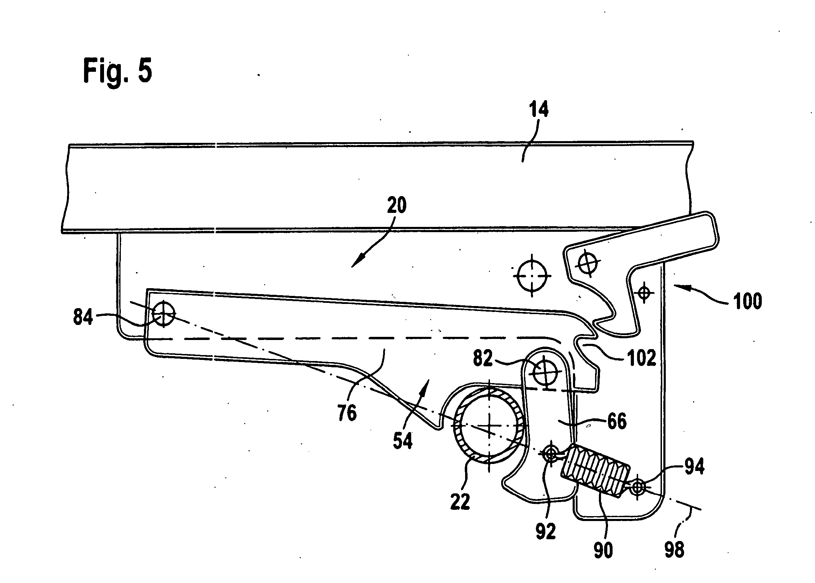

- Fig. 5: eine Darstellung ähnlich Fig. 2 einer Totpunktstellung und beim Bewegen der Haltevorrichtung von der Freigabestellung in die Fixierstellung;
- Fig. 6: eine Darstellung ähnlich Fig. 2 eines zweiten Ausführungsbeispiels eines erfindungsgemäßen Dachträgers;
- Fig. 7: eine Darstellung ähnlich Fig. 3 des zweiten Ausführungsbeispiels und
- Fig. 8: eine Darstellung einer besonders vorteilhaften Ausführung einer Verriegelungsvorrichtung bei einem dritten Ausführungsbeispiel eines erfindungsgemäßen Dachträgers.

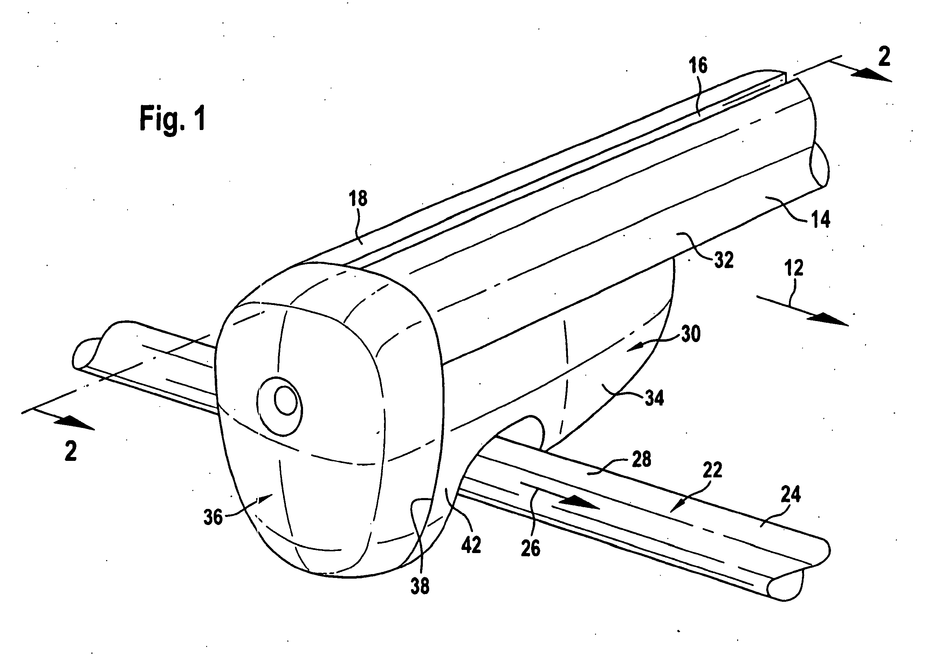

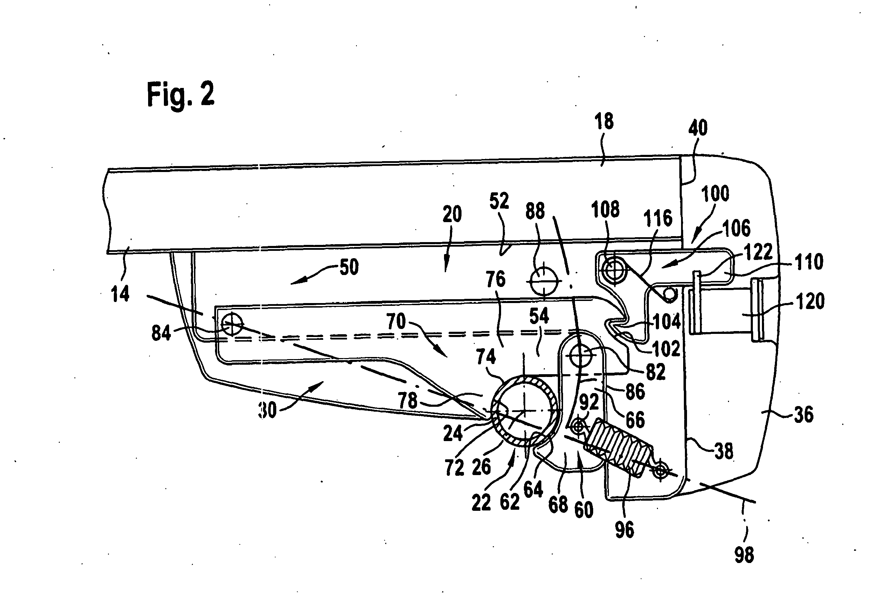

Ein erstes Ausführungsbeispiel eines erfindungsgemäßen Dachträgers, dargestellt in Fig. 1 und 2, umfasst einen sich quer zu einer Fahrzeuglängsrichtung 12 erstreckenden Querträger 14, an welchem verschiedene Dachlastenhalter, wie zum Beispiel Skiträger, Fahrradträger, Dachkoffer etc. montierbar sind, wobei diese beispielsweise in einer T-Nut 16 der Querträger mit entsprechenden Nutensteinen fixierbar sind.

An jeweiligen Endbereichen 18 der Querträger 14 sind als Ganzes mit 20 bezeichnete Haltevorrichtungen angeordnet, über welche eine Fixierung der Querträger 14 an fahrzeugseitig vorgesehenen Dachträgeraufnahmen 22 erfolgt, welche im in Fig. 1 und 2 dargestellten Fall des ersten Ausführungsbeispiels als Dachreling mit einem Dachrelingträger 24 ausgeführt sind, wobei sich auf beiden Seiten eines Fahrzeugdachs Dachrelingträger 24 mit einer Längsrichtung 26 ihrer zur Aufnahme der Haltevorrichtungen 20 vorgesehenen Bereichen 28 ungefähr parallel zur Fahrzeuglängsrichtung 12 erstrecken.

Die Dachträgeraufnahmen 22 könnten bei einer anderen Ausführungsform aber auch beispielsweise auf einer Dachfläche verlaufende Aufnahmeschienen oder auch in einer Dachfläche versenkt angeordnete Führungsschienen sein.

Wie in Fig. 1 und 2 dargestellt, ist jede der an einem der äußeren Enden 18 angeordneten Haltevorrichtungen 20 von einer Außenverkleidung 30 umschlossen, welche einen sich an eine Außenkontur 32 des Querträgers 14 anschließende und in Richtung der Dachträgeraufnahmen 22 erstreckende Außenschale 34 aufweist, welche im Wesentlichen die Haltevorrichtung 20 umschließt und einen Abschlussdeckel 36, welcher sich über eine der jeweils anderen Haltevorrichtung 20 abgewandte äußere Öffnung 38 der Außenschale 34 sowie eine endseitige Öffnung 40 des Querträgers 14 erstreckt und diese insgesamt überdeckt, so dass der Abschlussdeckel 36 sich im Bereich der endseitigen Öffnung 40 des Querträgers 14 an dessen Außenkontur 32 anpasst und im Bereich der äußeren Öffnung 38 der Außenschale 34 an deren Außenkontur 42 angepasst ist.

Die jeweilige Haltevorrichtung 20 umfasst ihrerseits einen als Ganzes mit 50 bezeichneten Gehäusekörper, welcher an einer der Dachträgeraufnahme 22 zugewandten Unterseite 52 des Querträgers 14 sitzt und mit diesem fest verbunden ist.

An dem Gehäusekörper 50 ist eine als Ganzes mit 54 bezeichnete Fixiereinheit gehalten, welche ein erstes Halteelement 60 aufweist, das mit einer ersten Haltefläche 62 in einer Fixierstellung an einer ersten Anlagefläche 64 der Dachträgeraufnahme 22 anlegbar ist, wobei die erste Anlagefläche 64 beispielsweise zumindest bereichsweise einem Dach des Kraftfahrzeugs zugewandt angeordnet ist, so dass durch Hintergreifen der ersten Anlagefläche 64 mit der ersten Haltefläche 62 das erste Halteelement 60 die Haltevorrichtung 20 gegen ein Wegbewegen vom Dach des Kraftfahrzeugs sichert.

Ferner umfasst die Fixiereinheit 54 ein zweites Halteelement 70, welches mit einer zweiten Haltefläche 72 an einer zweiten Anlagefläche 74 der Dachträgeraufnahme 22 anlegbar ist, wobei die zweite Anlagefläche 74 beispielsweise auf einer dem Dach des Fahrzeugs abgewandten Seite liegt.

In der Fixierstellung der Fixiereinheit 54 wird somit die Dachträgeraufnahme 22 von der ersten Anlagefläche 64 und der zweiten Anlagefläche 74 soweit umgriffen, dass quer zu der Längsrichtung 26 eine formschlüssige Festlegung der Haltevorrichtung 20 an der Dachträgeraufnahme 22, im vorliegenden Fall somit dem Dachrelingträger 24, erfolgt, während in Längsrichtung 26 eine kraftschlüssige Festlegung der Fixiereinheit 54 an der Dachträgeraufnahme 22, das heißt in diesem Fall ebenfalls an dem Dachrelingträger 24, erfolgt.

Hierzu sind die erste Haltefläche 62 und die zweite Haltefläche 72 nicht nur an der ersten Anlagefläche 64 und der zweiten Anlagefläche 74 anzulegen, sondern auch kraftbeaufschlagt gegen diese zu drücken, um die kraftschlüssige Festlegung gegen eine Bewegung in der Längsrichtung 26 zu erreichen.

Vorzugsweise ist das erste Halteelement 60 durch einen ersten Hebel 66 gebildet, welcher in einem Bereich 68 mit der ersten Haltefläche 62 versehen ist und im Abstand von dem Bereich 68 über ein Gelenk 82 mit einem zweiten Hebel 76 verbunden ist, der in einem von dem Gelenk 82 beabstandeten Bereich 78 die zweite Haltefläche 72 trägt, so dass durch das Gelenk 82 der erste Hebel 66 und der zweite Hebel 76 mit der ersten Haltefläche 62 und der zweiten Haltefläche 72 eine zangenartige Bewegung relativ zueinander ausführen können, um die Dachträgeraufnahme 22 zwischen den Halteflächen 62 und 72 aufzunehmen und in ihrer Fixierstellung einzuspannen sowie durch eine öffnende Zangenbewegung in ihrer Freigabestellung freizugeben.

Bei dem beschriebenen Ausführungsbeispiel setzt sich der zweite Hebel 76 ausgehend von dem Gelenk 82 über den Bereich 78 hinweg fort und ist mit einem Gelenk 84 schwenkbar an dem Gehäusekörper 50 gelagert, so dass die gesamte Fixiereinheit 54 durch das Gelenk 84 relativ zum Gehäusekörper 50 verschwenkbar ist, wodurch sich das Gelenk 82 auf einer Bahn 86 um das Gelenk 84 bewegen kann. Dabei ist die Bewegung des zweiten Hebels 76 um das Gelenk 84 in Richtung des Querträgers 14 begrenzt durch einen Anschlag 88 am Gehäusekörper 50, an welchem der zweite Hebel 76 in der Fixierstellung der Fixiereinheit 54 anliegt.

Um eine möglichst geringe Krümmung der Bahn 86 zu erhalten, liegt das Gelenk 84 bei in der Haltevorrichtung 20 fixierter Dachträgeraufnahme 22 auf einer dem ersten Halteelement 60 gegenüberliegenden Seite der Dachträgeraufnahme 22 und in einem möglichst großen Abstand von der Dachträgeraufnahme 22 in Richtung eines zwischen den Endbereichen 18 des Querträgers 14 liegenden inneren Bereichs versetzt.

Ferner liegt vorzugsweise in der Fixierstellung das Gelenk 82, mit welchem der erste Hebel 66 und der zweite Hebel 76 miteinander verbunden sind, näher am Querträger 14 als das Gelenk 92 und beide liegen auf derselben Seite der Verbindungslinie 98, nämlich auf der dem Querträger 14 zugewandten Seite.

Dagegen liegen in der Freigabestellung der Fixiereinheit 54 sowohl das Gelenk 82 als auch das Gelenk 92 auf einer dem Querträger 14 abgewandten Seite der Verbindungslinie 98. Ferner ist vorzugsweise der Abstand der ersten Haltefläche 62 und der Abstand der zweiten Haltefläche 72 von dem Gelenk 82 ungefähr gleich groß.

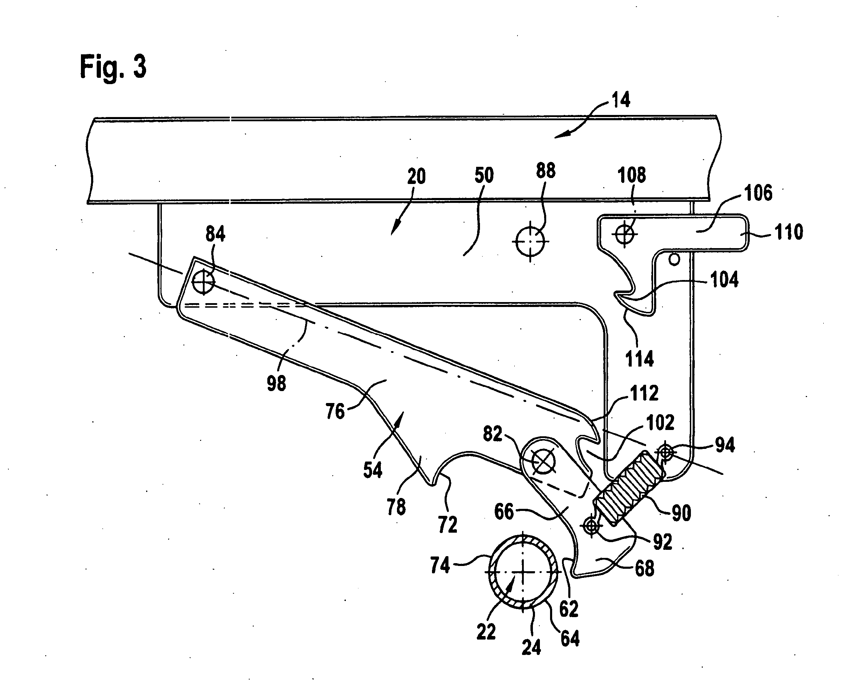

Ausgehend von der in Fig. 2 dargestellten Fixierstellung ist die Fixiereinheit in die in Fig. 3 dargestellte Lösestellung überführbar, in welcher der zweite Hebel 76 um das Gelenk 84 von dem Querträger 14 und von dem Anschlag 88 weggeschwenkt ist und auch der erste Hebel 66 um das Gelenk 82 derart verschwenkt ist, dass die Halteflächen 62 und 72 in der Freigabestellung einen weit größeren Abstand voneinander aufweisen und somit die Dachträgeraufnahme 22 nicht mehr von den Halteflächen 62, 72 umschlossen ist, so dass insgesamt die Haltevorrichtung 20 von der Dachträgeraufnahme 22, insbesondere des Dachrelingträgers 24, abgehoben werden kann.

In der Freigabestellung der Fixiereinheit 54 stehen dann auch die beiden Hebel 66 und 76 relativ zueinander so, dass sie einen größeren Winkel miteinander einschließen als in der in Fig. 2 dargestellten Fixierstellung, das heißt, dass die Freigabestellung ausgehend von der Fixierstellung durch eine sich öffnende Zangenbewegung der beiden Hebel 66 und 76 erreichbar ist, während die Fixierstellung ausgehend von der Freigabestellung durch eine schließende Zangenbewegung der Hebel 66 und 76 erreichbar ist.

Um die Bewegung des ersten Hebels 66 relativ zum zweiten Hebel 76 um das Gelenk 82 zwangsgesteuert durchführen zu können und somit sicherzustellen, dass beim Übergang von der Fixierstellung in die Freigabestellung die öffnende Zangenbewegung der Hebel 66 und 76 zueinander erfolgt, während beim Übergang von der Freigabestellung in die Fixierbewegung die schließende Zangenbewegung der Hebel 66 und 76 relativ zueinander erfolgt, ist an dem ersten Hebel 76 eine längenvariable Strebe 90 verbunden, und zwar über ein im Bereich 68 angreifendes Gelenk 92, wobei die Strebe 90 auf einer dem Gelenk 92 gegenüberliegenden Seite über ein Gelenk 94 an dem Gehäusekörper 50 gelagert ist und wobei das Gelenk 94 einen größeren Abstand von dem Querträger 14 aufweist als das Gelenk 84.

Die längenvariable Strebe 90 ist so ausgebildet, dass diese eine Maximallänge aufweist, die gegen die Kraft eines Federelements 96, vorzugsweise eines Tellerfederpakets, auf eine Minimallänge verkürzbar ist, wobei die Minimallänge der längenvariablen Strebe 90 ebenfalls definiert festgelegt ist, beispielsweise dadurch, dass das Tellerfederpaket nicht mehr weiter komprimierbar ist.

Die längenvariable Strebe 90 hat in der Freigabestellung der Fixiereinheit 54 ihre maximale Länge, die so bemessen ist, dass die längenvariable Strebe 90 in der Freigabestellung der Fixiereinheit 54 die Hebel 66 und 76 in ihrer maximal gestreckten Stellung hält, in welcher dann auch die Halteflächen 62 und 72 den größten Abstand voneinander aufweisen.

Wird nun bei in dieser Freigabestellung stehenden Hebeln 66 und 76 der Fixiereinrichtung 54 die Haltevorrichtung 20 auf die Dachträgeraufnahme 22 aufgesetzt, so beaufschlagt die Dachträgeraufnahme 22 den zweiten Hebel 76 beispielsweise in einem Abschnitt zwischen dem Bereich 78 und dem Gelenk 82 und verschwenkt den zweiten Hebel 76 unter Bewegung des Gelenks 82 längs der Bahn 86 in Richtung des Querträgers 14 und des Anschlags 88.

Gleichzeitig wird aufgrund der Wirkung der längenvariablen Strebe 90 der erste Hebel 66 um das Gelenk 82 so verschwenkt, dass sich die Haltefläche 62 in Richtung der Haltefläche 72 bewegt und somit eine zangenähnliche Schließbewegung erfolgt. Dabei hat die längenvariable Strebe 90 nach wie vor noch ihre maximale Länge, sofern das Gelenk 92 noch in einem ausreichend großen Abstand auf einer dem Querträger 14 gegenüberliegenden Seite einer Verbindungslinie 98 zwischen dem Gelenk 84 und dem Gelenk 94 befindet.

Durch Beaufschlagung der Haltevorrichtung 20 in Richtung der Dachträgeraufnahme 22 wird der zweite Hebel 76 weiter in Richtung des Querträgers 14 und des Anschlags 88 verschwenkt und gleichzeitig der erste Hebel 66 mit den Halteflächen 62 weiter in Richtung der Halteflächen 72 verschwenkt, wobei bei zunehmender Verschwenkung und zunehmender Annäherung des Gelenks 92 an die Verbindungslinie 98 die längenvariable Strebe 90 von der Maximallänge in Richtung ihrer Minimallänge verkürzt wird und ihre geringste Länge dann aufweist, wenn das Gelenk 92 auf der Verbindungslinie 98 liegt, so dass in diesem Fall für die Bewegung des Gelenks 92 um das Gelenk 94 eine Totpunktstellung mit maximaler Verkürzung der längenvariablen Strebe 90 erreicht ist. Diese Stellung der Hebel 66 und 76 entspricht jedoch noch nicht der Fixierstellung der Fixiereinheit 54 sondern die Fixierstellung wird dadurch erreicht, dass das Gelenk 92 über die Verbindungslinie 98 hinweg bewegt wird, und zwar in eine Stellung, in welcher das Gelenk 92 auf einer dem Querträger 14 zugewandten Seite der Verbindungslinie 98 steht, wie dies in Fig. 2 dargestellt ist.

In dieser Stellung ist die Länge der längenvariablen Strebe 90 größer als in der Totpunktstellung, so dass das Federelement 96 den ersten Hebel 66 und somit das erste Halteelement 60 mit seiner Federkraft beaufschlagt und zwar derart, dass durch die Kraft des Federelements 96 die erste Haltefläche 62 kraftbeaufschlagt an der ersten Anlagefläche 64 anliegt. Durch die in der Fixierstellung vorliegende Übertotpunktstellung der längenvariablen Strebe 90 wird bereits durch diese die Fixierstellung aufrecht erhalten, allerdings würde durch eine Krafteinwirkung auf die Haltevorrichtung 20 in Richtung von der Dachträgeraufnahme 22 weg wieder ein Überführen der Fixiereinheit 54 in die Freigabestellung möglich sein.

Aus diesem Grund ist eine als Ganzes mit 100 bezeichnete Verriegelungsvorrichtung vorgesehen, mit welcher die Fixierstellung festlegbar ist.

Die Verriegelungsvorrichtung 100 könnte auf unterschiedliche Teile der Fixiereinheit 54 einwirken. Bei dem dargestellten ersten Ausführungsbeispiel wirkt die Verriegelungsvorrichtung 100, wie in Fig. 2 dargestellt, auf den zweiten Hebel 76 und legt diesen dann fest, wenn der zweite Hebel 76 an dem Bereich 78 anliegt.

Hierzu ist der zweite Hebel 76 beispielsweise an einer dem Gelenk 84 gegenüberliegenden Seite mit einem Ausschnitt 102 versehen, in welchen eine Riegelnase 104 eines Schwenkriegels 106 dann eingreift, wenn der zweite Hebel 76 an dem Anschlag 88 in der Fixierstellung anliegt. Die Riegelnase 104 ist am Schwenkriegel 106 derart angeordnet, dass der Schwenkriegel 106 den Hebel 76 gegen ein Verschwenken vom Anschlag 88 weg blockiert.

Der Schwenkriegel 106 ist dabei um eine Schwenkachse 108 schwenkbar und mit einem Betätigungsarm 110 versehen, welcher über die äußere Öffnung 38 der Außenverkleidung 30 übersteht und somit bei aufgesetztem Abschlussdeckel 36 in diesen hineinragt und somit für eine Bedienungsperson nicht zugänglich und somit diebstahlsicher ist. Eine Betätigung des Betätigungsarms 110 erfordert daher ein Abnehmen des Abschlussdeckels 36

Durch Einwirken auf den Betätigungsarm 110 ist es möglich, den Schwenkriegel 106 derart um die Schwenkachse 108 zu verschwenken, dass die Riegelnase 104 außer Eingriff mit dem Ausschnitt 102 kommt, so dass dann durch Kraftbeaufschlagung der Haltevorrichtung 20 in Richtung von der Dachträgeraufnahme 22 weg der zweite Hebel 76 vom Anschlag 88 weg verschwenkbar ist, wodurch der erste Hebel 66 ebenfalls von dem Querträger 14 weg bewegt wird und das Gelenk 92 sich ebenfalls wieder über die Verbindungslinie 98 hinweg auf eine dem Querträger 14 abgewandte Seite derselben bewegt, so dass sich insgesamt die Fixiereinheit 54 öffnet und in die bereits beschriebene Freigabestellung übergeht.

Um ein automatisches Einrasten der Verriegelungsvorrichtung 100 zu erreichen, ist der zweite Hebel 76 in einem in der Freigabestellung dem Schwenkriegel 106 zugewandten Bereich mit einer Einlaufschräge 112 versehen und in gleicher Weise auch die Riegelnase 104 des Schwenkriegels 106 in einem in der Freigabestellung dem zweiten Hebel 76 zugewandten Bereich mit einer Auflaufschräge 114 versehen, die beim Verschwenken des zweiten Hebels 76 in Richtung des Anschlags 88 den Schwenkriegel 106 gegen die Kraft einer auf den Schwenkriegel 106 einwirkenden Schwenkfeder 116 soweit verschwenkt, dass die Riegelnase 104 sich aus der Bahn des Ausschnitts 102 herausbewegt und dann, wenn der zweite Hebel 76 am Anschlag 88 anliegt, in den Ausschnitt 102 eingreift, um den zweiten Hebel 76 in der Fixierstellung relativ zum Gehäusekörper 50 festzulegen.

Zur sicheren Fixierung des Abschlussdeckels 36 ist dieser vorzugsweise noch mit einem Schloss 120 versehen, dessen Schließriegel 122 in der geschlossenen Stellung an dem Schwenkriegel 106 angreift, um somit auch den Schwenkriegel 106 in seiner verriegelnden Stellung, in welcher die Riegelnase 104 in Eingriff mit dem Ausschnitt 102 am zweiten Hebel 76 ist, zu fixieren und eine unbeabsichtigte Lösebewegung des Schwenkriegels 106 und somit ein Lösen der Verriegelung des zweiten Hebels 76 in seiner Fixierstellung bei geschlossenem Schloss 120 zu verhindern. Erst wenn das Schloss 120 geöffnet ist und der Schließriegel 122 nicht mehr am Schwenkriegel 106 angreift, ist daher eine Bewegung des Schwenkriegels 106 im Sinne eines Lösens der Verriegelung möglich.

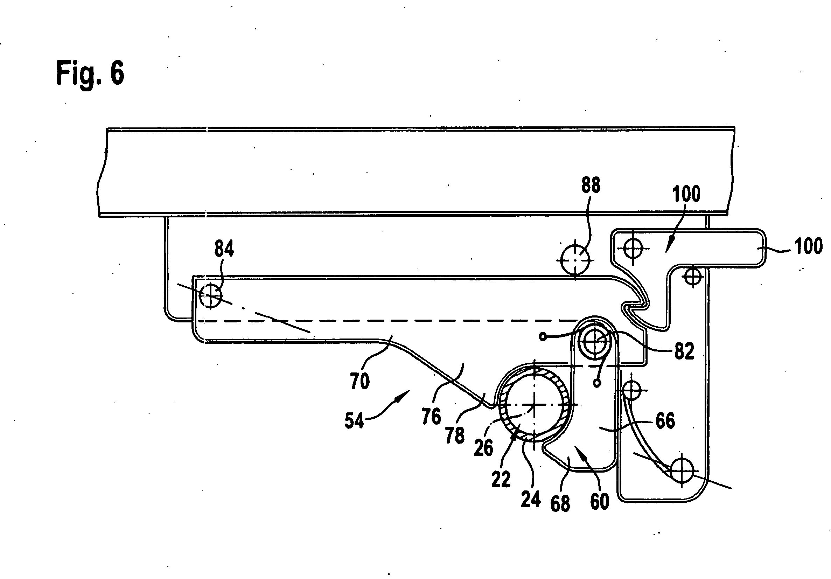

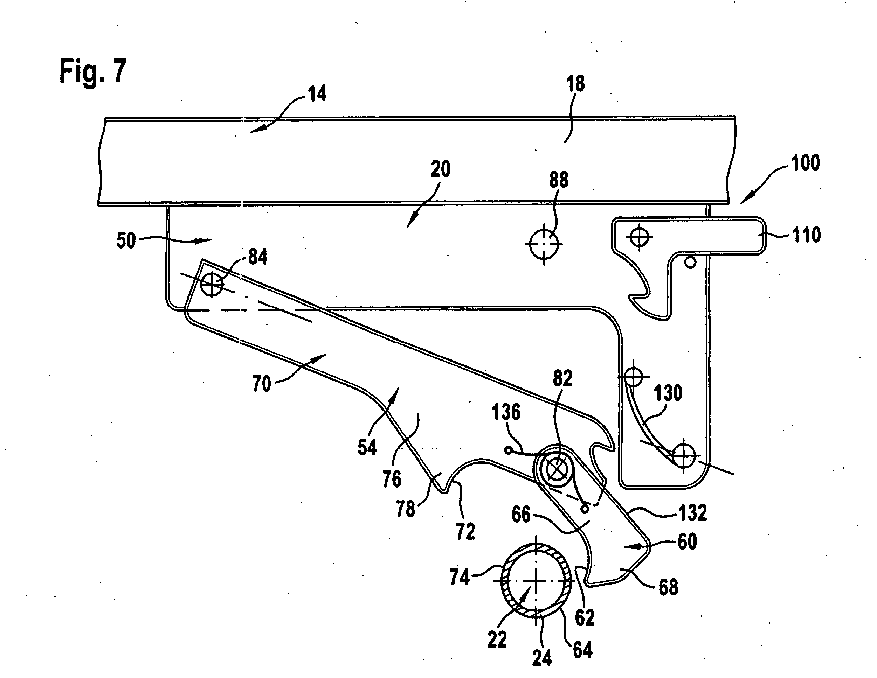

Bei einem zweiten Ausführungsbeispiel eines erfindungsgemäßen Dachträgers, dargestellt in Fig. 6 und 7 sind diejenigen Elemente, die mit denen des ersten Ausführungsbeispiels identisch sind, mit denselben Bezugszeichen versehen.

Im Gegensatz zum ersten Ausführungsbeispiel ist keine längenvariable Strebe vorgesehen, sondern anstelle der längenvariablen Strebe zur Abstützung des ersten Halteelements 60 in der Fixierstellung eine am Gehäusekörper 50 angeordnete Führung 130, an welcher der das erste Halteelement 60 bildende erste Hebel 66 mit seiner Rückseite 132 anlegbar ist, wobei beim Verschwenken der Fixiereinheit 54 von der Freigabestellung in die Fixierstellung eine Rückseite 132 des ersten Hebels 66 an der Führungseinrichtung 130 zur Anlage kommt und sukzessive so weit relativ zum ersten Halteelement 70 verschwenkt wird, dass letztlich dann, wenn das erste Halteelement 70 an dem Anschlag 88 anliegt, beide Halteelemente 60, 70 in ihrer Fixierstellung stehen und die Dachträgeraufnahme 22 zumindest formschlüssig fixieren.

Um ferner eine sich öffnende Zangenbewegung der Hebel 66 und 76 beim Übergang von der Fixierstellung in die Freigabestellung zu erreichen, sind die Hebel 66, 76 noch durch eine Drehfeder 136 beaufschlagt, die im Sinne einer Öffnungsbewegung des Winkels zwischen den Hebeln 66 und 76 wirkt, und somit sicherstellt, dass in der Freigabestellung der Hebel 66 in dem maximal vorgesehenen Winkel relativ zum Hebel 76 steht.

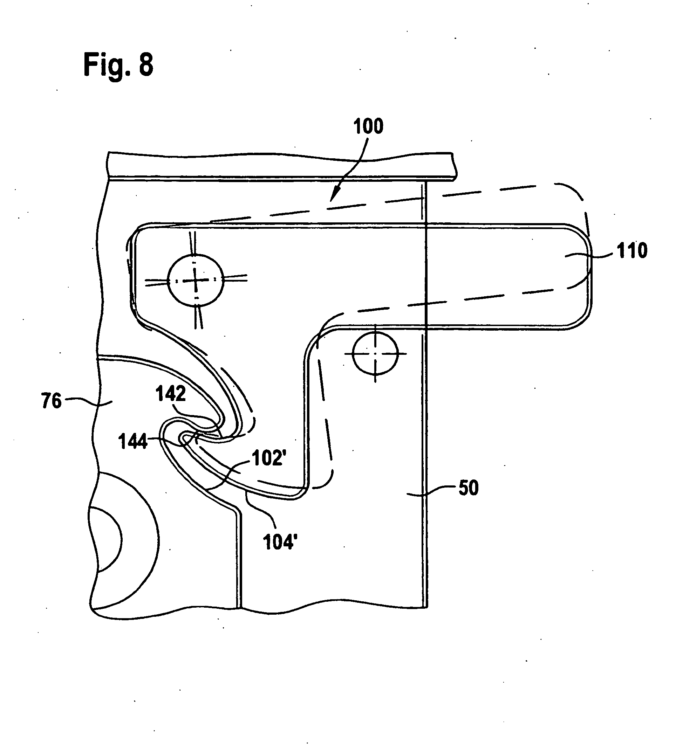

Bei einem dritten Ausführungsbeispiel eines erfindungsgemäßen Dachträgers, dargestellt in Fig. 8, ist die Riegelnase 104' mit einer konkav gewölbten Fläche 142 versehen, welche mit einer konvex gewölbten Fläche 144 des Ausschnitts 102' des zweiten Hebels 76 zusammenwirkt, so dass bei zunehmender Bewegung des zweiten Hebels 76 in Richtung des Anschlags 88 die konvexen Flächen 142 und 144 sich so relativ zueinander bewegen, dass die Riegelnase 104' zunehmend in den Ausschnitt 102' eintritt und stets mit der Fläche 142 auf die Fläche 144 wirkt. Damit ist ein sogenanntes "Nachstellen" der Riegelnase 104' bei zunehmender Bewegung des zweiten Hebels 76 in Richtung des Anschlags 88 möglich.

Außerdem ist auch das dritte Ausführungsbeispiel hinsichtlich der übrigen Merkmale mit den ersten Ausführungsbeispielen identisch, so dass auf diese vollinhaltlich Bezug genommen wird.

## Patentansprüche

1. Dachträger für Kraftfahrzeuge mit einer Dachträgeraufnahme (22), umfassend einen Querträger (14) und endseitig des Querträgers (14) angeordnete Haltevorrichtungen (20), die relativ zueinander zwischen einer an der Dachträgeraufnahme (22) formschlüssig angreifenden Fixierstellung und einer die Dachträgeraufnahme (22) freigebenden Freigabestellung und umgekehrt bewegbare Halteelemente (60, 70) aufweisen und die durch die Halteelemente (60, 70) an der Dachträgeraufnahme (22) fixierbar sind,
wobei jede Haltevorrichtung (20) mindestens ein gegenüber einem Gehäusekörper (50) bewegbares erstes Halteelement (60) aufweist, welches durch Zusammenwirken mit der Dachträgeraufnahme (22) beim Aufsetzen der jeweiligen Haltevorrichtung (20) auf die Dachträgeraufnahme (22) von der Freigabestellung in die Fixierstellung bewegbar ist, **dadurch gekennzeichnet dass** dieses Halteelement (60) beim Abheben der Haltevorrichtung (20) von der Dachträgeraufnahme (22) von der Fixierstellung in die Freigabestellung bewegbar ist.

2. Dachträger nach Anspruch 1, **dadurch gekennzeichnet, dass** das erste Halteelement (60) durch Krafteinwirkung auf die Haltevorrichtung (20) zwischen der Freigabestellung und der Fixierstellung hin- und herbewegbar ist.

3. Dachträger nach Anspruch 2, **dadurch gekennzeichnet, dass** der Übergang von der Freigabestellung in die Fixierstellung eine Kraftbeaufschlagung der Haltevorrichtung (20) in Richtung der Dachträgeraufnahme (22) erfordert.

4. Dachträger nach Anspruch 2 oder 3, **dadurch gekennzeichnet, dass** der Übergang von der Fixierstellung in die Freigabestellung eine Kraftbeauf schlagung der Haltevorrichtung (20) in Richtung von der Dachträgeraufnahme (22) weg erfordert.

5. Dachträger nach einem der voranstehenden Ansprüche, **dadurch gekennzeichnet, dass** das erste Halteelement (60) in der Fixierstellung durch einen elastischen Kraftspeicher (96) im Sinne einer kraftschlüssigen Festlegung an der Dachträgeraufnahme (22) beaufschlagt ist.

6. Dachträger nach Anspruch 5, **dadurch gekennzeichnet, dass** das erste Halteelement (60) mit einem elastischen Kraftspeicher (96) zusammenwirkt, der in der Fixierstellung das erste Halteelement (60) im Sinne einer Aufrechterhaltung der Fixierstellung beaufschlagt.

7. Dachträger nach einem der voranstehenden Ansprüche, **dadurch gekennzeichnet, dass** das erste Halteelement (60) um mindestens ein Gelenk (82) bewegbar gelagert ist.

8. Dachträger nach einem der voranstehenden Ansprüche, **dadurch gekennzeichnet, dass** die Haltevorrichtung (20) neben dem ersten Halteelement (60) ein mit diesem zur Fixierung des Dachträgers an der Dachträgeraufnahme (22) zusammenwirkendes, gegenüber dem Gehäusekörper (50) bewegbares zweites Halteelement (70) aufweist.

9. Dachträger nach Anspruch 8, **dadurch gekennzeichnet, dass** das erste und das zweite Halteelement (60, 70) gemeinsam zwischen ihrer Freigabestellung und ihrer Fixierstellung bewegbar sind.

10. Dachträger nach Anspruch 9, **dadurch gekennzeichnet, dass** das erste und das zweite Halteelement (60, 70) durch ein Gelenk (82) miteinander verbunden sind.

11. Dachträger nach einem der Ansprüche 8 bis 10, **dadurch gekennzeichnet, dass** das erste und das zweite Halteelement (60, 70) in der Fixierstellung gemeinsam die Dachträgeraufnahme (22) zumindest teilweise umfassen.

12. Dachträger nach Anspruch 11, **dadurch gekennzeichnet, dass** das erste und das zweite Halteelement (60, 70) in der Fixierstellung an der Dachträgeraufnahme (22) kraftschlüssig angreifen.

13. Dachträger nach einem der Ansprüche 8 bis 12, **dadurch gekennzeichnet, dass** das erste und das zweite Halteelement (60, 70) Halteflächen (62, 72) aufweisen, die in der Fixierstellung auf gegenüberliegenden Seiten an der Dachträgeraufnahme (22) angreifen.

14. Dachträger nach Anspruch 13, **dadurch gekennzeichnet, dass** die Halteflächen (62, 72) zum Erreichen der Fixierstellung in der Art einer Zangenbewegung an Anlageflächen (64, 74) der Dachträgeraufnahme (22) anlegbar sind.

15. Dachträger nach Anspruch 14, **dadurch gekennzeichnet, dass** die Halteflächen (62, 72) zum Erreichen der Freigabestellung in der Art einer Zangenbewegung von Anlageflächen (64, 74) der Dachträgeraufnahme (22) wegbewegbar sind.

16. Dachträger nach einem der Ansprüche 8 bis 15, **dadurch gekennzeichnet, dass** das erste Halteelement (60) und das zweite Halteelement (70) als gelenkig miteinander verbundene Hebel ausgebildet sind.

17. Dachträger nach einem der Ansprüche 8 bis 16, **dadurch gekennzeichnet, dass** ein Gelenk (82) zwischen dem ersten und dem zweiten Halteelement (60, 70) auf einer Bahn (86) relativ zu dem Gehäusekörper (50) bewegbar ist.

18. Dachträger nach Anspruch 17, **dadurch gekennzeichnet, dass** eines der Halteelemente (70) an dem Gehäusekörper (50) mittels eines Gelenks (84) gelagert ist.

19. Dachträger nach Anspruch 18, **dadurch gekennzeichnet, dass** das andere der Halteelemente (60) zumindest in der Fixierstellung gegenüber dem Gehäusekörper (50) abgestützt ist.

20. Dachträger nach Anspruch 19, **dadurch gekennzeichnet, dass** die Abstützung mittels einer längenvariablen Strebe (90) erfolgt, die gelenkig mit dem anderen der Halteelemente (60) und gelenkig mit dem Gehäusekörper (50) verbunden ist.

21. Dachträger nach Anspruch 20, **dadurch gekennzeichnet, dass** die längenvariable Strebe (90) gegen die Wirkung eines elastischen Kraftspeichers (96) von einer Maximallänge bis zu einer Minimallänge variierbar ist.

22. Dachträger nach Anspruch 21, **dadurch gekennzeichnet, dass** der elastische Kraftspeicher (96) selbst die Minimallänge festlegt.

23. Dachträger nach Anspruch 21 oder 22, **dadurch gekennzeichnet, dass** die Minimallänge der Strebe (90) in der Fixierstellung eine formschlüssige Fixierung an der Dachträgeraufnahme (22) sicherstellt.

24. Dachträger nach einem der Ansprüche 20 bis 23, **dadurch gekennzeichnet, dass** die das erste und das zweite Halteelement (60, 70) bildenden Hebel (66, 76) und die Strebe (90) zusammen eine dreiarmige Hebelanordnung bilden.

25. Dachträger nach einem der Ansprüche 8 bis 24, **dadurch gekennzeichnet, dass** eines der Halteelemente (60, 70) in seiner Fixierstellung durch eine Verriegelungsvorrichtung (100) festlegbar ist.

26. Dachträger nach Anspruch 25, **dadurch gekennzeichnet, dass** die Verriegelungsvorrichtung bei Erreichen der Fixierstellung selbsttätig verriegelnd wirksam ist.

27. Dachträger nach Anspruch 25 oder 26, **dadurch gekennzeichnet, dass** mit der Verriegetungsvorrichtung (100) eines der Halteelemente (60, 70) relativ zum Gehäusekörper (50) festlegbar ist.

## Claims

1. Roof rack for motor vehicles with a roof rack receiver (22), comprising a transverse bar (14) and retaining devices (20), which are disposed on the end of the transverse bar (14) and comprise retaining elements (60, 70), which are movable relative to one another between a fixing position engaging positively with the roof rack receiver (22) and a release position releasing the roof rack receiver (22) and vice versa, and which can be fixed by means of the retaining elements (60, 70) to the roof rack receiver (22), wherein each retaining device (20) comprises at least one first retaining element (60), which is movable relative to a housing body (50) and which by interacting with the roof rack receiver (22) when mounting of the respective retaining device (20) onto the roof rack receiver (22) is movable from the release position into the fixing position,
**characterized in that** this retaining element (60) when the lifting of the retaining device (20) off the roof rack receiver (22) is movable from the fixing position into the release position.

2. Roof rack according to claim 1, **characterized in that** the first retaining element (60) is movable to and fro between the release position and the fixing position by the action of force upon the retaining device (20).

3. Roof rack according to claim 2, **characterized in that** the transition from the release position to the fixing position requires the retaining device (20) to be acted upon by a force in the direction of the roof rack receiver (22).

4. Roof rack according to claim 2 or 3, **characterized in that** the transition from the fixing position to the release position requires the retaining device (20) to be acted upon by a force in a direction away from the roof rack receiver (22).

5. Roof rack according to one of the preceding claims,
**characterized in that** the first retaining element (60) in the fixing position is acted upon by an elastic energy storage device (96) to effect a force-locking attachment to the roof rack receiver (22).

6. Roof rack according to claim 5, **characterized in that** the first retaining element (60) interacts with an elastic energy storage device (96), which in the fixing position acts upon the first retaining element (60) to maintain the fixing position.

7. Roof rack according to one of the preceding claims, **characterized in that** the first retaining element (60) is mounted movably about at least one articulation (82).

8. Roof rack according to one of the preceding claims,
**characterized in that** the retaining device (20) in addition to the first retaining element (60) comprises a second retaining element (70), which co-operates with the first retaining element (60) in order to attach the roof rack to the roof rack receiver (22) and is movable relative to the housing body (50).

9. Roof rack according to claim 8, **characterized in that** the first and the second retaining element (60, 70) are movable jointly between their release position and their fixing position.

10. Roof rack according to claim 9, **characterized in that** the first and the second retaining element (60, 70) are connected to one another by an articulation (82).

11. Roof rack according to one of claims 8 to 10,
**characterized in that** the first and the second retaining element (60, 70) in the fixing position jointly at least partially embrace the roof rack receiver (22).

12. Roof rack according to claim 11, **characterized in that** the first and the second retaining element (60, 70) in the fixing position engage the roof rack receiver (22) in force-locking manner.

13. Roof rack according to one of claims 8 to 12,
**characterized in that** the first and the second retaining element (60, 70) have retaining faces (62, 72), which in the fixing position engage the roof rack receiver (22) at opposite sides.

14. Roof rack according to claim 13, **characterized in that** the retaining faces (62, 72) in order to achieve the fixing position can be applied in the manner of a pincer movement to seating faces (64, 74) of the roof rack receiver (22).

15. Roof rack according to claim 14, **characterized in that** the retaining faces (62, 72) in order to achieve the release position are movable in the manner of a pincer movement away from seating faces (64, 74) of the roof rack receiver (22).

16. Roof rack according to one of claims 8 to 15,
**characterized in that** the first retaining element (60) and the second retaining element (70) are formed as levers that are articulated to one another.

17. Roof rack according to one of claims 8 to 16,
**characterized in that** an articulation (82) between the first and the second retaining element (60, 70) is movable along a path (86) relative to the housing body (50).

18. Roof rack according to claim 17, **characterized in that** one of the retaining elements (70) is mounted on the housing body (50) by means of an articulation (84).

19. Roof rack according to claim 18, **characterized in that** the other of the retaining elements (60) at least in the fixing position is supported relative to the housing body (50).

20. Roof rack according to claim 19, **characterized in that** the support is effected by means of a variable-length strut (90), which is hinge-connected to the other of the retaining elements (60) and articulated to the housing body (50).

21. Roof rack according to claim 20, **characterized in that** the variable-length strut (90) is variable from a maximum length to a minimum length counter to the action of an elastic energy storage device (96).

22. Roof rack according to claim 21, **characterized in that** the elastic energy storage device (96) itself defines the minimum length.

23. Roof rack according to claim 21 or 22, **characterized in that** the minimum length of the strut (90) in the fixing position ensures a positive fixing on the roof rack receiver (22).

24. Roof rack according to one of claims 20 to 23,
**characterized in that** the levers (66, 76), which form the first and the second retaining element (60, 70), and the strut (90) together form a three-armed lever arrangement.

25. Roof rack according to one of claims 8 to 24,
**characterized in that** one of the retaining elements (60, 70) can be fixed in its fixing position by means of a locking device (100).

26. Roof rack according to claim 25, **characterized in that** the locking device comes into locking effect automatically upon attainment of the fixing position.

27. Roof rack according to claim 25 or 26, **characterized in that** by means of the locking device (100) one of the retaining elements (60, 70) can be fixed relative to the housing body (50).

## Revendications

1. Galerie de toit pour véhicule automobile, avec un logement de galerie de toit (22) comprenant une traverse (14) et des dispositifs de fixation (20) disposés du côté extrémité de la traverse (14) et présentant des éléments de fixation (60, 70) pouvant être déplacés l'un par rapport à l'autre entre une position de blocage attaquant par complémentarité de forme au niveau du logement de galerie de toit (22) et une position de déblocage débloquant le logement de galerie de toit (22) et vice versa, et pouvant être fixés au logement de galerie de toit (22) par l'intermédiaire des éléments de fixation (60, 70), dans laquelle chaque dispositif de fixation (20) présente au moins un premier élément de fixation (60) pouvant être déplacé par rapport à un corps de boîtier (50) et pouvant être déplacé par coopération avec le logement de galerie de toit (22), lorsque le dispositif de fixation respectif (20) est mis en place sur le logement de galerie de toit (22), de la position de déblocage vers la position de blocage, **caractérisée en ce que** cet élément de fixation (60) peut être déplacé de la position de blocage vers la position de déblocage lorsque le dispositif de fixation (20) est enlevé du logement de galerie de toit (22).

2. Galerie de toit selon la revendication 1, **caractérisée en ce que** le premier élément de fixation (60) peut être, sous l'effet d'une force sur le dispositif de fixation (20), déplacé dans les deux sens entre la position de déblocage et la position de blocage.

3. Galerie de toit selon la revendication 2, **caractérisée en ce que** le passage de la position de déblocage à la position de blocage nécessite une sollicitation du dispositif de fixation (20) par une force en direction du logement de galerie de toit (22).

4. Galerie de toit selon la revendication 2 ou 3, **caractérisée en ce que** le passage de la position de blocage à la position de déblocage nécessite une sollicitation du dispositif de fixation (20) par une force dans une direction s'éloignant du logement de galerie de toit (22).

5. Galerie de toit selon l'une quelconque des revendications précédentes, **caractérisée en ce que** le premier élément de fixation (60) est sollicité dans la position de fixation par un accumulateur d'énergie élastique (96) sous la forme d'une immobilisation par adhérence au niveau du logement de galerie de toit (22).

6. Galerie de toit selon la revendication 5, **caractérisée en ce que** le premier élément de fixation (60) coopère avec un accumulateur d'énergie élastique (96) qui sollicite dans la position de blocage le premier élément de fixation (60) sous la forme d'une conservation de la position de blocage.

7. Galerie de toit selon l'une quelconque des revendications précédentes, **caractérisée en ce que** le premier élément de fixation (60) est logé de façon à pouvoir se déplacer autour d'au moins une articulation (82).

8. Galerie de toit selon l'une quelconque des revendications précédentes, **caractérisée en ce que** le dispositif de fixation (20) présente en plus du premier élément de fixation (60) un deuxième élément de fixation (70) coopérant avec le premier pour bloquer la galerie de toit au niveau du logement de galerie de toit (22) et pouvant être déplacé par rapport au corps de boîtier (50).

9. Galerie de toit selon la revendication 8, **caractérisée en ce que** le premier et le deuxième élément de fixation (60, 70) peuvent être déplacés ensemble entre leur position de déblocage et leur position de blocage.

10. Galerie de toit selon la revendication 9, **caractérisée en ce que** le premier et le deuxième élément de fixation (60, 70) sont reliés ensemble par une articulation (82).

11. Galerie de toit selon l'une quelconque des revendications 8 à 10, **caractérisée en ce que** le premier et le deuxième élément de fixation (60, 70) entourent dans la position de blocage ensemble le logement de galerie de toit (22), au moins en partie.

12. Galerie de toit selon la revendication 11, **caractérisée en ce que** le premier et le deuxième élément de fixation (60, 70) attaquent dans la position de blocage par adhérence au niveau du logement de galerie de toit (22).

13. Galerie de toit selon l'une quelconque des revendications 8 à 12, **caractérisée en ce que** le premier et le deuxième élément de fixation (60, 70) présentent des surfaces de fixation (62, 72) qui attaquent dans la position de blocage sur des côtés opposés au niveau du logement de galerie de toit (22).

14. Galerie de toit selon la revendication 13, **caractérisée en ce que** pour atteindre la position de blocage, les surfaces de fixation (62, 72) peuvent être appliquées contre des surfaces d'appui (64, 74) du logement de galerie de toit (22) à la manière d'un mouvement de pince.

15. Galerie de toit selon la revendication 14, **caractérisée en ce que** pour atteindre la position de déblocage, les surfaces de fixation (62, 72) peuvent être éloignées des surfaces d'appui (64, 74) du logement de galerie de toit (22) à la manière d'un mouvement de pince.

16. Galerie de toit selon l'une quelconque des revendications 8 à 15, **caractérisée en ce que** le premier élément de fixation (60) et le deuxième élément de fixation (70) sont réalisés comme des leviers reliés ensemble de façon articulée.

17. Galerie de toit selon l'une quelconque des revendications 8 à 16, **caractérisée en ce qu'**une articulation (82) entre le premier et le deuxième élément de fixation (60, 70) peut être déplacée sur une voie (86) par rapport au corps de boîtier (50).

18. Galerie de toit selon la revendication 17, **caractérisée en ce que** l'un des éléments de fixation (70) est logé sur le corps de boîtier (50) au moyen d'une articulation (84).

19. Galerie de toit selon la revendication 18, **caractérisée en ce que** l'autre des éléments de fixation (60) s'appuie au moins dans la position de blocage par rapport au corps de boîtier (50).

20. Galerie de toit selon la revendication 19, **caractérisée en ce que** le soutien est réalisé au moyen d'un montant (90) de longueur variable et qui est relié de façon articulée à l'autre des éléments de fixation (60) et est relié de façon articulée au corps de boîtier (50).

21. Galerie de toit selon la revendication 20, **caractérisée en ce que** le montant de longueur variable (90) peut être amené à varier d'une longueur maximale à une longueur minimale contre l'effet d'un accumulateur d'énergie élastique (96) .

22. Galerie de toit selon la revendication 21, **caractérisée en ce que** l'accumulateur d'énergie élastique (96) définit lui-même la longueur minimale.

23. Galerie de toit selon la revendication 21 ou 22, **caractérisée en ce que** la longueur minimale du montant (90) dans la position de blocage assure un blocage au niveau du logement de galerie de toit (22) par complémentarité de forme.

24. Galerie de toit selon l'une quelconque des revendications 20 à 23, **caractérisée en ce que** les leviers (66, 76) constituant le premier et le deuxième élément de fixation (60, 70) et le montant (90) constituent ensemble un agencement de levier à trois bras.

25. Galerie de toit selon l'une quelconque des revendications 8 à 24, **caractérisée en ce que** l'un des éléments de fixation (60, 70) peut être bloqué dans sa position de blocage par un dispositif de verrouillage (100).

26. Galerie de toit selon la revendication 25, **caractérisée en ce que** le dispositif de verrouillage en atteignant la position de blocage produit un effet de verrouillage automatique.

27. Galerie de toit selon la revendication 25 ou 26, **caractérisée en ce que** le dispositif de verrouillage (100) permet de bloquer l'un des éléments de fixation (60, 70) par rapport au corps de boîtier (50).
